# EUROPEAN PATENT SPECIFICATION

(11) **EP 0 663 370 B1**
(45) Date of publication and mention of the grant of the patent: **29.08.2001**
(21) Application number: 93910402.2
(22) Date of filing: 27.05.1993
(51) Int. Cl.: C01B 31/10, C01B 31/12

(54) **METHOD OF PRODUCING ACTIVE CARBON FROM WASTE TIRES**
VERFAHREN ZUR HERSTELLUNG VON AKTIVKOHLE AUSGEHEND VON GEBRAUCHTEN REIFEN
PROCEDE DE PRODUCTION DE CARBONE ACTIF A PARTIR DE VIEUX PNEUMATIQUES

(30) Priority: 27.05.1992 JP 13487292; 05.11.1992 JP 29556292
(43) Date of publication of application: 19.07.1995
(73) Proprietor: JCA, LTD., Fukuoka-shi, Fukuoka 815 (JP)
(72) Inventor: MATSUMOTO, Katsumi, Fukuoka-shi, Fukuoka 815 (JP); NAKANO, Shigekazu, Ashiya-shi, Hyogo 659 (JP)
(74) Representative: Barz, Peter, Dr.
(86) International application number: JP9300707
(87) International publication number: WO9324408

(56) References cited:
- WO-A-91/05735
- DE-A- 2 731 862
- JP-A- 49 102 595
- CHEMICAL ABSTRACTS, vol. 99, no. 4, 25 July 1983 Columbus, Ohio, US; abstract no. 24788, YATSEVSKAYA M. I. & AL 'Activating carbon from waste automobile tires' page 132; column r; & DOKL. AKAD. NAUK BSSR, vol. 27, no. 4, 1983 pages 343--345,
- DATABASE WPI Section Ch, Week 7741 Derwent Publications Ltd., London, GB; Class A35, AN 77-72938Y & JP-A-50 116 385 ( NIPPON ZEON KK) , 11 September 1975
- Carbon Material Society, "Activated Carbon - Basics and Applications", September 1, 1978 (01.09.78), Kodansha K.K. (Tokyo), p. 103-106.

## Description

The present invention relates to a method for producing activated carbon from waste tires.

In this specification, "%" means "% by weight".

The quantity of waste automobile tires is steadily increasing and there are cases in which waste tires laid up in a heap catch fire spontaneously to cause a massive outflow of harmful oil containing heavy metals. Therefore, it is an urgent task for the industry to develop a method for effective utilization of waste tires.

For effective utilization of waste automobile tires, an attempt has been made to extract the oil fraction from the waste tires and produce activated carbon from the char available as the carbonization residue of the tires. However, since the activated carbon produced contains zinc and other heavy metals derived from the waste tires, the uses for such activated carbon are much restricted by the need for preventing contamination with heavy metals. Thus, for example, such activated carbon cannot be used in water treatment. Meanwhile, there is a great demand for inexpensive activated carbon, particularly in the field of water treatment and, accordingly, for the development of an expedient method for eliminating heavy metals from waste tire-based activated carbon.

Chemical Abstracts Vol. 99, No. 4 (1983) No. 24788h describe steam-activating pyrolyzed automobile tire residue at 850°C, grinding the product and removing ash with 15% HCl.

The object of the present invention is to provide a method for producing a harmless and inexpensive activated carbon free of heavy metals from waste automobile tires.

In accordance with the present invention, activated carbon is produced by the method defined in claim 1.

The char which can be used in the present invention is obtained, for example, by subjecting waste tires to pyrolysis in an inert gas (e.g. nitrogen gas) atmosphere at normal pressure and at a temperature from 450 to 550°C.

The steam activation can be conducted in an inert gas atmosphere, such as nitrogen gas, at a temperature of from 700 to 1000°C, preferably 800 to 850°C, for a time period of 4 to 8 hours, preferably 5 to 6 hours.

The concentration of hydrochloric acid to be employed for treatment of the activated and pulverized char may range from 1 to 10%, preferably 2 to 5%. The temperature of hydrochloric acid may range from room temperature to 80°C, preferably from 70 to 80°C. The duration of the hydrochloric acid treatment is generally 1 to 24 hours, preferably 2 hours.

The hydrochloric acid treatment is followed by washing with water or a dilute alkaline solution. The conditions and frequency of such washing are dependent on the conditions of hydrochloric acid treatment and especially on the concentration of the hydrochloric acid used.

According to the present invention, metal impurities can be effectively removed from activated carbon by an expedient procedure without affecting the yield and adsorption capacity of the activated carbon. Thus, the invention provides a technology which achieves both effective disposal of waste tires and production of a useful grade of activated carbon from waste tires at low cost. It has also been found that the activated carbon produced by the method of the invention is fully useful for water treatment and other purposes.

### EXAMPLES

The following examples and comparative examples are further illustrative of the present invention.

### Examples 1 through 3

### (1) Activation of a waste tire carbonization char

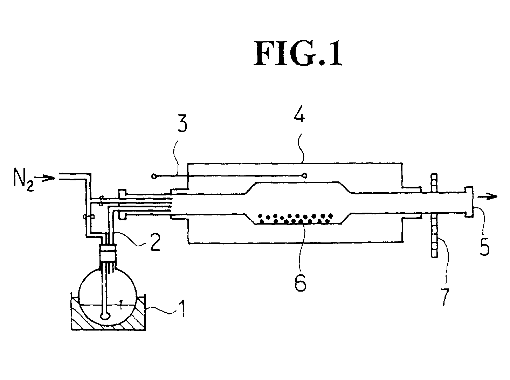

The waste tire carbonization char obtained in the conventional manner was dried at 110°C for 2 hours, at the end of which time it was charged into the core zone of a batch-type externally heated rotary kiln (60 cm out. dia. and 100 cm long) shown in Fig. 1 for activation under the following conditions.
Activation temperature: 850°C
Reaction time: 4 hours
Steam feeding rate: 1 g/g/hour
Nitrogen gas flow rate: 500 ml/min.
Waste tire carbonization char: 50 g
Kiln rotational speed: 2 rpm.

After completion of activation, the product in the kiln was cooled with nitrogen gas for use as an activated char sample.

### (2) Hydrochloric acid treatment at room temperature

The activated char obtained by the above procedure was pulverized to 250 µm (60 mesh) or less and hot water, 2% HCl and 5% HCl were added to 15-gram portions of the pulverizate respectively. Each mixture was stirred for 1 hour and suction-filtered. Each of the activated char was transferred to a separate beaker, in which it was stirred with purified water at room temperature for 30 minutes and, then, filtered. This washing procedure was repeated 3 times, followed by washing with purified water. The resulting activated sample free of metals was dried at 110°C for use as an activated carbon sample.

### Analysis

Using the activated carbon samples obtained the following tests were performed.

Each test was carried out under the following conditions.

| Test item | Test method |
|---|---|
| Ashes | JIS-M8812 |
| Zinc dissolution test | JIS-K1474 and Japanese |

The analysis for zinc was made as follows.

To 3g of the carbon sample (activated carbon or char), was added 150 ml of water at pH 4 {8 ml of nitric acid (specific gravity 1.38) diluted 1,000-fold with water and, then, further diluted 1,000-fold} and the mixture was boiled for 10 minutes. After cooling, the mixture was diluted with water to make 150 ml and filtered. The initial 30 ml portion of the filtrate was discarded and the remainder was analyzed for zinc.

The ash content was determined by taking about 1 g of the carbon in a porcelain crucible and calcifying it at a temperature not below 800°C. The resulting ashes were dissolved in 40 ml of HCl (1:1) and the solution was concentrated to 10 ml in a beaker by heating. The concentrate was filtered and the filtrate was taken in a 50 ml volumetric flask to give a total volume of 50 ml with purified water and analyzed for zinc by atomic absorption spectrometry.
The results are shown in Table 1.

**Table 1**

| Example | Conditions of hydrochloric acid treatment | Ashes (%) | Zinc in ashes (%) | Amount of eluted zinc (ppm) |
|---|---|---|---|---|
| Example 1 (Comparative) | Hot H₂O washing | 6.0 | 0.74 | 12 |
| Example 2 | Hot 2% HCl | 2.2 | 0.17 | 185 |
| Example 3 | Hot 5% HCl | 1.9 | 0.11 | 121 |

The above results indicate that the eluting amount of zinc is suppressed when hydrochloric acid washing is performed after pulverization.

## Claims

1. A method of producing activated carbon which comprises the steps of:
obtaining char by carbonizing waste tire at a temperature of from 450 to 550°C;
activating by applying steam to the char under an inert gas atmosphere at a temperature of from 700 to 1000°C for 4 to 8 hours; pulverizing the char to 250 µm (60 mesh) or less;
treating the pulverized char with a 1 to 10 weight % hydrochloric acid solution at a temperature from room temperature to 80°C;
washing the hydrochloric acid treated pulverized char with water or a dilute alkaline solution.

2. A method according to claim 1, wherein the temperature in the activating step is from 800 to 850°C.

3. A method according to claim 1 or 2, wherein the concentration of the hydrochloric acid is from 1 to 5 weight %.

## Patentansprüche

1. Verfahren zur Herstellung von Aktivkohle, umfassend die Schritte:
Gewinnen von verkohltem Material durch Verkohlen von Altreifen bei einer Temperatur von 450 bis 550°C,
Aktivieren durch Einwirken von Dampf auf das verkohlte Material unter einer Inertgasatmosphäre bei einer Temperatur von 700 bis 1000°C für 4 bis 8 Stunden, Pulverisieren des verkohlten Materials auf 250 µm (60 mesh) oder weniger,
Behandeln des pulverisierten verkohlten Materials mit einer 1 bis 10 Gew.-% Salzsäure-Lösung bei einer Temperatur von Raumtemperatur bis 80°C,
Waschen des mit Salzsäure behandelten, pulverisierten verkohlten Materials mit Wasser oder einer verdünnten alkalischen Lösung.

2. Verfahren nach Anspruch 1, bei dem die Temperatur im Aktivierungsschritt 800 bis 850°C beträgt.

3. Verfahren nach Anspruch 1 oder 2, bei dem die Konzentration der Salzsäure 1 bis 5 Gew.-% beträgt.

## Revendications

1. Procédé de production de carbone actif, qui comprend les étapes consistant à :
obtenir du charbon par carbonisation de pneumatiques usés, à une température de 450 à 550°C,
soumettre le charbon à une activation par de la vapeur, dans une atmosphère de gaz inerte, à une température de 700 à 1000°C, pendant 4 à 8 heures,
pulvériser le charbon jusqu'à l'obtention d'une taille de 250 micromètres (60 mesh) ou moins,
traiter le charbon pulvérisé avec une solution d'acide chlorhydrique à 1 à 10 % en poids, à une température allant de la température de la salle à 80°C,
laver le charbon pulvérisé, traité par de l'acide chlorhydrique, avec de l'eau ou une solution alcaline diluée.

2. Procédé selon la revendication 1, dans lequel la température lors de l'étape d'activation est de 800 à 850°C.

3. Procédé selon la revendication 1 ou 2, dans lequel la concentration de la solution d'acide chlorhydrique est de 1 à 5 % en poids.
